# EUROPÄISCHE PATENTANMELDUNG

(11) **EP 1 004 477 A1**
(43) Veröffentlichungstag der Anmeldung: **31.05.2000**
(21) Anmeldenummer: 99103661.7
(22) Anmeldetag: 25.02.1999
(51) Int. Cl.: B60R 11/02

(54) **Anordnung zur Befestigung eines tragbaren Funktelefons in einem Kraftfahrzeug**

(30) Priorität: 24.11.1998 DE 29820983 U
(71) Anmelder: Herbert Richter Metallwaren-Apparatebau GmbH & Co., 75180 Pforzheim (DE)
(72) Erfinder: Richter, Herbert, 75331 Engelsbrand (DE)
(74) Vertreter: Trappenberg, Hans

(57) **Zusammenfassung**

Eine Anordnung zur Befestigung eines tragbaren Funktelefons in einem Kraftfahrzeug weist eine Halterung (1) auf, welche an einem biegsamen Tragarm (2) befestigt ist. An dem der Halterung (1) abgewandten Ende des Tragarms sind Mittel (3) zur Befestigung des Tragarms (2) an einer Kopfstütze (5) eines Kraftfahrzeugsitzes angeordnet.

## Beschreibung

Die Erfindung betrifft eine Anordnung nach dem Oberbegriff des Anspruchs 1 zur Befestigung eines tragbaren Funktelefons in einem Kraftfahrzeug, mit einer Halterung, welche mit einem biegsamen Tragarm befestigt ist.

Eine derartige Anordnung ist beispielsweise aus dem deutschen Geschmacksmuster M 95 038 17.5 bekannt. Bei dem bekannten Geschmacksmuster ist eine Halterung, welche zur Aufnahme eines tragbaren Funktelefons vorgesehen ist, an einem Tragarm befestigt, welcher als sogenannter 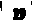 Shwanenhals" ausgebildet ist. An seinem der Halterung abgewandten Ende weist der Tragarm ein Befestigungselement auf, welches seinerseits drehbar mit einer dreieckigen Halteplatte verbunden ist. Die Halteplatte weist Öffnungen auf, mittels welcher sie beispielsweise an der Mittelkonsole oder am Armaturenbrett eines Kraftfahrzeugs befestigt werden kann. Da sich die Stellung des Befestigungselements auf der Halteplatte einstellen läßt und der Tragarm biegsam ist, läßt sich die Halterung in einer Position anordnen, in der sie sehr leicht zugänglich ist.

Wenngleich bei der bekannten Anordnung das Funktelefon auch sehr leicht erreichbar ist, so erlaubt die Position es jedoch nicht, daß das Funktelefon während des Sprechbetriebs in der Halterung verbleiben kann. Die Entfernung eines sich in der Halterung befindlichen Funktelefons zum Mund einer sich im Kraftfahrzeug befindlichen Person ist zu groß. Des weiteren ist die Lautstärke des Wiedergabeteils des Funktelefons zu gering, als daß es zum Hören in der Halterung verbleiben könnte.

Es ist Aufgabe der Erfindung eine eingangs genannte Anordnung derart auszubilden, daß die Halterung näher am Kopf einer sich im Kraftfahrzeug befindlichen Person anordenbar ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung sind am der Halterung abgewandten Ende des Tragarms Mittel vorgesehen, welche an einer Kopfstütze eines Kraftfahrzeugsitzes befestigbar sind. Hierdurch wird in vorteilhafter Weise erreicht, daß der Tragarm mit seinem der Halterung abgewandten Ende an einer Kopfstütze befestigt werden kann. Hierdurch kann die Halterung in eine Position gebracht werden, in der sie sich im geringen Abstand zum Kopf einer auf dem Kraftfahrzeugsitz sitzenden Person befindet. Die Halterung kann mittels des biegsamen Tragarms so eingestellt werden, daß sie dieselbe Stellung hat, die sie haben würde, wenn die das Funktelefon nutzende Person das Funktelefon mit der Hand ans Ohr hielte. Durch die zum telefonieren optimale Stellung werden Nebengeräusche im wesentlichen ausgeschaltet. Dies wirkt sich sehr gut auf die Verständigung mittels des Funktelefons aus. Durch die erfindungsgemäße Anordnung kann in akustischer Hinsicht ein so hochwertiges Telefonat geführt werden, wie es mit einer Freisprechanlage kaum erreichbar sein dürfte, wobei der Komfort bei der Handhabung des Funktelefons dem Komfort einer Freisprechanlage entspricht.

Der Tragarm besteht in vorteilhafter Weise aus einem durch Biegung nicht bleibend verformbaren Rohr, in dessen Inneren ein durch Biegung bleibend verformbarer Stab angeordnet ist, wie dies dem deutschen Gebrauchsmuster 295 13 581.6 entspricht. Es ist jedoch auch möglich, einen herkömmlichen Schwanenhals zu verwenden oder jeden anderen beliebig ausgebildeten biegsamen Tragarm.

Bei einer besonderen Ausführungsform der Erfindung ist eine Klammer vorgesehen, welche an einer Befestigungsstrebe der Kopfstütze befestigbar ist. In besonders vorteilhafter Weise besteht die Klammer aus zwei Halbschalen, welche miteinander verbindbar sind. Mittels einer derart ausgebildeten Klammer läßt sich der Tragarm auf sehr einfache Weise sehr fest an einer Strebe der Kopfstütze befestigen. Darüber hinaus läßt sich eine derartige Klammer sehr preiswert herstellen.

Besonders günstig ist es, wenn die Halbschalen innen mit einer elastischen Auflage versehen sind. Hierdurch können Größentoleranzen ausgeglichen werden. Dies ist besonders vorteilhaft, da die Befestigungsstreben von Kopfstützen je nach Ausführungsform unterschiedliche Durchmesser aufweisen. Die elastische Auflage ist zweckmäßigerweise als selbstklebendes Gummiteil ausgebildet. Hierdurch kann die Klammer auf einfache Weise mit dem Gummiteil versehen werden, wodurch beim Anbringen der Klammer an die Befestigungsstrebe der Kopfstütze eine Differenz von beispielsweise 4 Millimetern ausgeglichen werden kann. Dies ist besonders günstig, da die Durchmesser der Befestigungsstreben von Kopfstützen von 10 Millimeter bis 14 Millimeter differieren. Durch die Möglichkeit des Größentoleranzausgleichs kann die erfindungsgemäße Halterung an jede beliebige Kopfstütze fest und unverrutschbar angebracht werden.

Bei einer weiteren Ausführungsform der Erfindung ist vorgesehen, daß die Klammer aus zwei Laschen besteht, welche jeweils an einem Ende U-förmig umgebogen sind, wobei die Laschen gegeneinander verschiebbar miteinander befestigt sind. Bei einer derartigen Ausführungsform ist es besonders vorteilhaft, wenn wenigstens eine der Laschen ein Langloch aufweist, durch welches sich ein Gewindebolzen erstreckt, welcher mit der anderen Lasche verbunden ist.

Durch die gegeneinander verschiebbar U-förmigen Laschen kann die Klammer auf einfache Weise mit beiden Streben einer Kopfstütze verbunden werden. Durch die Verschiebbarkeit der Klammern wird zum einen eine sehr einfache Montage gewährleistet, zum anderen wird dadurch der Vorteil erreicht, daß die Klammer unabhängig von einem bestimmten Kopfstützentyp mit den Streben der Kopfstützen verbunden werden kann. Denn durch die Verschiebbarkeit der U-förmigen Laschen läßt sich die Klammer an Kopfstützenstreben befestigen, welche unterschiedlich weit voneinander angeordnet sind.

Wenngleich am Tragarm auch jede beliebige Halterung angebracht sein kann, so hat sich jedoch als besonders vorteilhaft eine erfindungsgemäße Anordnung herausgestellt, bei der die Halterung eine Bodenplatte hat, welche mit einer rutschfesten elastischen Auflage wie beispielsweise Moosgummi versehen ist, und in welcher Dauermagnete eingelassen sind. Die Halterung kann an ihren Seiten Stege aufweisen, an welchen das Funktelefon anliegt. Die über die Auflagefläche hervorstehenden Stege können beispielsweise unten und an einer Seite der Halterung angebracht sein, so daß sie einen Anschlagwinkel bilden. Mittels einer derartigen Halterung läßt sich das Funktelefon auf sehr einfache Weise in die Halterung einlegen beziehungsweise aus der Halterung entnehmen. Darüber hinaus kann eine derartige Halterung auch sehr klein ausgebildet sein, da die sonst üblichen Klemmbacken nicht erforderlich sind.

Besonders vorteilhaft ist jedoch eine Halterung, welche lediglich aus einer Platte ohne Hervorstehungen besteht. Dadurch, daß keine Hervorstehungen wie beispielsweise an den Seiten angebrachte Winkel oder Stege vorhanden sind, läßt sich das Funktelefon sehr leicht auf der Halterung ablegen. Das Funktelefon kann beispielsweise von links oder rechts oder von oben oder unten auf die Halterung geführt werden, ohne daß störende Stege im Weg sind. Die Kraft der Magnete ist so groß, daß das Funktelefon rutschfest auf der Halterung angeordnet ist, ohne daß Anschlagkanten vorhanden sind. Zur Verstärkung der Magnetkraft kann das Funktelefon auch mit selbstklebenden Blechstreifen versehen werden. Durch die selbstklebenden Blechstreifen wird die auf das Funktelefon ausgeübte Anziehungskraft der Magnete stark erhöht.

Selbstverständlich läßt sich die erfindungsgemäße Anordnung gleichermaßen am Fahrersitz wie auch am Beifahrersitz oder an den Rücksitzen verwenden.

Weitere Merkmale der vorliegenden Erfindung ergeben sich aus der nachfolgenden Beschreibung eines besonderen Ausführungsbeispiels unter Bezugnahme auf die Zeichnung.

Es zeigt
- Figur 1: eine erste Ausführungsform einer erfindungsgemäßen Anordnung,
- Figur 2: eine zweite Ausführungsform einer erfindungsgemäßen Anordnung und
- Figur 3: eine dritte Ausführungsform einer erfindungsgemäßen Anordnung im Betrieb.

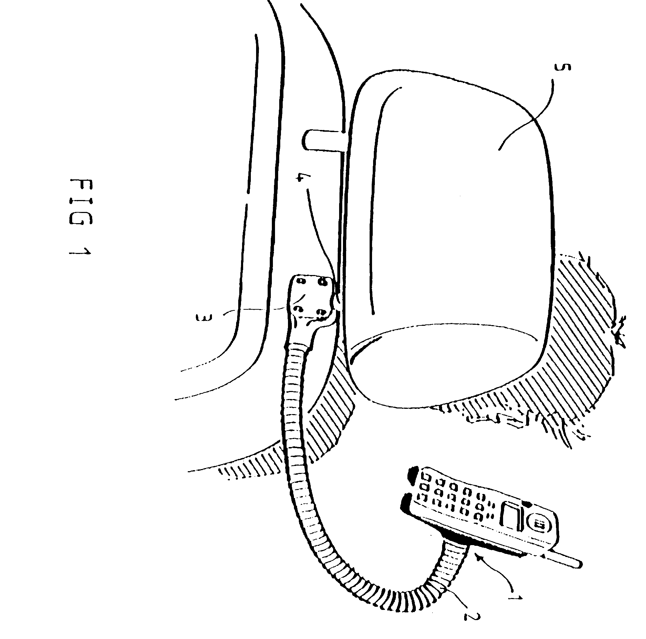

Wie der Figur 1 zu entnehmen ist, ist an einem Ende eines Tragarms 2 eine Halterung 1 für ein Funktelefon angeordnet. Der Tragarm 2 ist als sogenannter 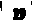 Schwanenhals" ausgebildet. Er besteht in vorteilhafter Weise aus einem Kunststoffrohr, in dessen Inneren sich ein Aluminiumstab befindet.

Am anderen Ende des Tragarms 2 ist eine Klammer 3 angeordnet, welche aus zwei Halbschalen besteht. Die Halbschalen weisen jeweils Bohrungen auf, so daß sie miteinander verschraubt werden können. Zur Verschraubung werden insbesondere Inbusschrauben verwendet. Die Klammer 3 ist so ausgebildet, daß sie fest mit einer Strebe 4 einer Kopfstütze 5 eines Kraftfahrzeugsitzes verbunden werden kann. Die Verbindung ist so fest, daß die Klammer 3 verschieb- und verdrehsicher auf der Strebe 4 sitzt.

Die Halterung 1 besteht aus einem Grundkörper, welcher eine Grundplatte aufweist, auf welcher sich eine rutschfeste, elastische Auflage aus Moosgummi befindet. In dem Grundkörper 1 sind Dauermagnete eingelassen, welche das Funktelefon fest auf die Grundplatte ziehen. Die Grundplatte weist an ihrer mit der Auflage versehenen Seite keine Hervorstehungen auf.

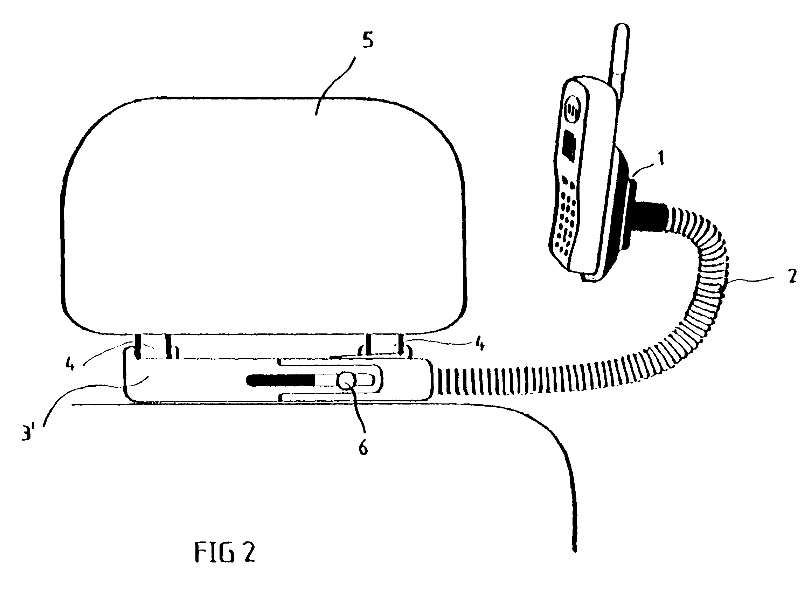

Die in Figur 2 dargestellte Ausführungsform der erfindungsgemäßen Anordnung entspricht im wesentlichen der in Figur 1 dargestellten Anordnung. Der Einfachheit halber sind dieselben Elemente mit denselben Bezugszeichen versehen.

Wie der Figur 2 entnommen werden kann, ist an dem der Halterung 1 abgewandten Ende des Tragarms 2 eine Klammer 3' angeordnet, welche aus zwei Laschen besteht, welche jeweils an einem Ende U-förmig umgebogen sind. Eine der Laschen weist ein Langloch auf, durch welches sich ein Gewindebolzen 6 erstreckt, welcher mit der anderen Lasche verbunden ist. Hierdurch sind die Laschen gegeneinander verschiebbar.

Zur Befestigung der Klammer an den Streben 4 der Kopfstütze 5 werden die beiden Laschen so weit auseinandergezogen, daß der Abstand der sich gegenüberstehenden Stirnseiten der beiden U-förmig gebogenen Enden der Laschen größer ist als der Abstand der beiden Streben 4. Hierdurch kann die Klammer auf die Streben 4 aufgesetzt werden. Danach werden die beiden Laschen soweit zusammengeschoben, daß die U-förmigen Enden die beiden Streben 4 fest umschließen. In dieser Stellung werden die beiden Laschen mittels des Gewindebolzens 6 fest miteinander verschraubt, so daß die Klammer 3' fest mit der Kopfstütze 5 verbunden ist.

Eine derartige Klammer 3' hat den Vorteil, daß sie unabhängig vom Typ der Kopfstütze mit einer Kopfstütze verbunden werden kann. Darüber hinaus gewährleistet die Befestigung an beiden Streben 4 der Kopfstütze 5 eine besonders stabile Befestigung.

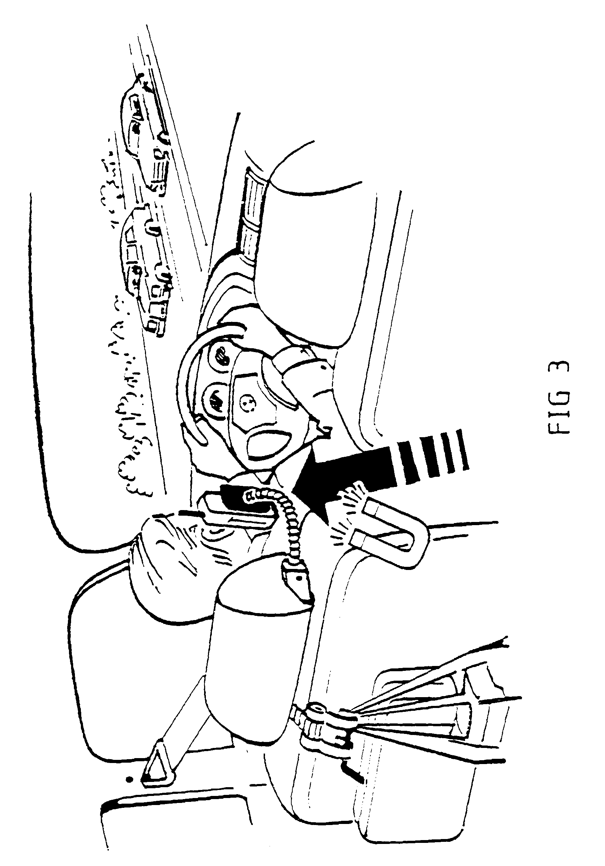

Wie insbesondere der Figur 3 entnommen werden kann, läßt sich mittels der erfindungsgemäßen Anordnung das Funktelefon in eine solche Stellung bringen, daß sich der Lautsprecher des Funktelefons unmittelbar am Ohr und das Mikrofon des Funktelefons in der Nähe des Munds des Fahrers befindet. Die erfindungsgemäße Anordnung erlaubt es dem Fahrer in derselben Weise zu telefonieren, wie er es tun würde, wenn er das Funktelefon in der Hand hielte. Durch die erfindungsgemäße Anordnung ist der Fahrer jedoch in der Lage, beide Hände am Steuer des Kraftfahrzeuges zu lassen. Dies ist von sehr großer Bedeutung im Hinblick auf die Sicherheit

Bei der in Figur 3 dargestellten Anordnung ist statt einer Klammer, welche an den Streben der Kopfstütze befestigt wird, ein direkt mit der Kopfstütze verbundenes Element vorhanden. Wichtig ist jedoch, daß der Tragarm rutschfest an der Kopfstütze befestigt ist.

## Patentansprüche

1. Anordnung zur Befestigung eines tragbaren Funktelefons in einem Kraftfahrzeug, mit einer Halterung (1), welche an einem biegsamen Tragarm (2) befestigt ist,
dadurch gekennzeichnet,
daß an dem der Halterung (1) abgewandten Ende des Tragarms (2) Mittel zur Befestigung des Tragarms an einer Kopfstütze eines Kraftfahrzeugsitzes angeordnet sind.

2. Anordnung nach Anspruch 1,
dadurch gekennzeichnet,
daß an dem der Halterung (1) abgewandten Ende des Tragarms eine Klammer (3, 3') angeordnet ist, welche an einer Befestigungsstrebe (4) einer Kopfstütze eines Kraftfahrzeugsitzes befestigbar ist.

3. Anordnung nach Anspruch 2,
dadurch gekennzeichnet,
daß die Klammer (3) aus zwei Halbschalen besteht, welche Mittel aufweisen, mittels der sie miteinander befestigbar sind.

4. Anordnung nach Anspruch 3,
dadurch gekennzeichnet,
daß die Haftschalen innen mit einer elastischen Auflage versehen sind, zum Ausgleich von Größentoleranzen.

5. Anordnung nach Anspruch 2,
dadurch gekennzeichnet,
daß die Klammer (3') aus zwei Laschen besteht, welche jeweils an einem Ende U-förmig umgebogen sind, wobei die Laschen gegeneinander verschiebbar miteinander befestigt sind.

6. Anordnung nach Anspruch 5,
dadurch gekennzeichnet,
daß wenigstens eine der Laschen ein Langloch aufweist, durch welches sich ein Gewindebolzen (6) erstreckt, welcher mit der anderen Lasche verbunden ist.

7. Anordnung nach einem der Ansprüche 1 bis 6,
dadurch gekennzeichnet,
daß die Halterung (1) eine Bodenplatte hat, welche mit einer rutschfesten elastischen Auflage versehen ist, und in welcher Dauermagnete eingelassen sind.

8. Anordnung nach Anspruch 7,
dadurch gekennzeichnet,
daß die Bodenplatte an ihrer mit der Auflage versehenen Seite keinerlei Hervorstehungen aufweist.
